# EUROPEAN PATENT SPECIFICATION

(11) **EP 1 774 141 B1**
(45) Date of publication and mention of the grant of the patent: **30.03.2011**
(21) Application number: 05849434.5
(22) Date of filing: 13.05.2005
(51) Int. Cl.: F01D 11/14

(54) **TURBINE CASE REINFORCEMENT IN A GAS TURBINE JET ENGINE**
TURBINENGEHÄUSEVERSTÄRKUNG BEI EINEM GASTURBINENTRIEBWERK
RENFORCEMENT DE CARTER DE TURBINE DANS UN MOTEUR PROPULSEUR A TURBINE A GAZ

(30) Priority: 17.05.2004 US 571701 P
(43) Date of publication of application: 18.04.2007
(60) Divisional application: 10183864.7
(73) Proprietor: Carlton Forge Works, Paramount, CA 90723 (US)
(72) Inventor: Cardarella L. James Jr., Newport Coast CA 92657 (US)
(74) Representative: Frost, Alex John
(86) International application number: PCT/US2005/016901
(87) International publication number: WO 2006/046969

(56) References cited:
- EP-A- 1 475 516
- EP-A- 1 508 673
- US-A- 4 878 821
- US-A- 5 154 575
- US-B1- 6 514 041

## Description

### BACKGROUND

Since the development of the gas turbine jet engine, blade tip clearance within the interior of the casing has been a challenging problem. Blade tip and inter-stage sealing have taken on a prominent role in engine design since the late 1960's. This is because the clearance between the blade tips and surrounding casing tends to vary due primarily to changes in thermal and mechanical loads on the rotating and stationary structures. On today's largest land-based and aero turbine engines, the high pressure turbine case ("HPTC") and low pressure turbine case ("LPTC") have such large diameters that they are more susceptible to expanding excessively and becoming out-of-round, exacerbating the blade tip clearance problem.

Reduced clearance in both the HPTC and the LPTC can provide dramatic reductions in specific fuel consumption ("SFC"), compressor stall margin and engine efficiency, as well as increased payload and mission range capabilities for aero engines. Improved clearance management can dramatically improve engine service life for land-based engines and time-on-wing ("TOW") for aero engines. Deterioration of exhaust gas temperature ("EGT") margin is the primary reason for aircraft engine removal from service. The Federal Aviation Administration ("FAA") certifies every aircraft engine with a certain EGT limit. EGT is used to indicate how well the HPTC is performing. Specifically, EGT is used to estimate the disk temperature within the HPTC. As components degrade and clearance between the blade tips and the seal on the interior of the casing increase, the engine has to work harder (and therefore runs hotter) to develop the same thrust. Once an engine reaches its EGT limit, which is an indication that the high pressure turbine disk is reaching its upper temperature limit, the engine must be taken down for maintenance. Maintenance costs for major overhauls of today's large commercial gas turbine jet engines can easily exceed one million dollars.

US 5154575 discloses the use of a ring member placed with a gap around the outer diameter of the stator case of a gas turbine. The ring member is constructed of a material with a lower thermal expansion rate than that of the stator case.

US 4878821 discloses an anti-rupture ring for turbo plants achieved by providing a slit in the ring atleast at one location in the circumference of the ring.

EP 1508673 forms part of the prior art under Art. 54(3) EPC and discloses a pseudo flange assembly with a ring coupled to a casing rim by a shrink interference fit.

EP 1475516 forms part of the prior art under Art. 54(3) EPC and discloses a method of controlling clearance in a gas turbine engine by attaching a band to the case outer diameter.

### BRIEF DESCRIPTION OF THE DRAWINGS

FIG. 1 shows a schematic diagram of the overall structure of a typical gas turbine jet engine.
FIG. 2 shows a sectional schematic diagram of a low pressure turbine case of a typical gas turbine jet engine.
FIG. 3 shows a sectional schematic diagram of the low pressure turbine case of FIG. 2 fitted with stiffener rings in an embodiment of the present description.
FIG. 4 shows a sectional schematic diagram of Section A of the low pressure turbine case of FIG. 3, showing the stiffener ring about to be seated in an embodiment of the present description.
FIG. 5 shows a sectional schematic diagram of a section of a low pressure turbine case showing the stiffener ring about to be seated in another embodiment of the present description.
FIG. 6 shows a sectional schematic diagram of a section of a low pressure turbine case showing the stiffener ring seated in another embodiment of the present description. FIG. 7 shows a sectional schematic diagram of a section of a low pressure turbine case showing the stiffener ring seated in another embodiment of the present description.
FIG. 8 shows an improvement in clearance under load in an embodiment of the present description. FIGS. 9A, 9B, and 9C show sectional schematic diagrams of a section of a low pressure turbine case having the stiffener ring positioned on the low pressure turbine case with a hydraulic nut and secured with a locking nut.
FIG. 10 shows a schematic diagram of a low pressure turbine case having stiffener rings actuated by hydraulic, electric, or other means.
FIG. 11 shows a schematic cross-sectional diagram of a low pressure turbine case having stiffener rings.

### DETAILED DESCRIPTION OF THE DRAWINGS

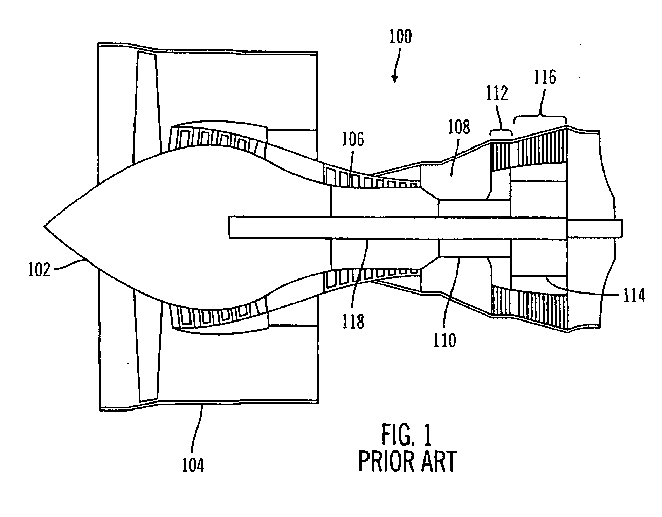

Referring now to the Figures, in which like reference numerals and names refer to structurally and/or functionally similar elements thereof, Figure 1 shows a schematic diagram of the overall structure of a typical gas turbine jet engine. Referring now to FIG. 1, Gas Turbine Jet Engine 100 has Fan 102 for air intake within Fan Frame 104. High Pressure Compressor Rotor 106 and its attached blades and stators force air into Combustor **108,** increasing the pressure and temperature of the inlet air. High Pressure Turbine Rotor **110** and its accompanying blades and stators are housed within High Pressure Turbine Case **112.** Low Pressure Turbine Rotor **114** and its accompanying blades and stators are housed within Low Pressure Turbine Case **116.** The turbine extracts the energy from the highpressure, high-velocity gas flowing from Combustor **108** and is transferred to Low Pressure Turbine Shaft **118.**

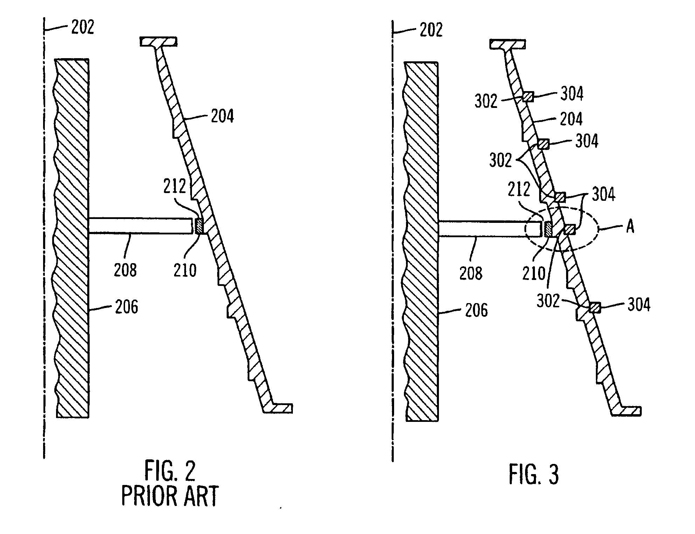

**Figure 2** shows a sectional schematic diagram of a low pressure turbine case of a typical gas turbine jet engine. Referring now to **FIG. 2****,** Centerline **202** runs through the center of Low Pressure Turbine Case **204** (shown in cross-section). Rotor 206 (shown in cross-section) has Blade **208** attached thereto and rotates on an axis of rotation along centerline 202. One skilled in the art will recognize that many more blades and stators would normally be present within Low Pressure Turbine Case **204.** Only one Blade **208** is shown for simplicity.

Labyrinth seal designs vary by application. Sometimes the labyrinth seals are located on the blade tips, and sometimes they are located on the inside diameter of the cases as shown in **FIG. 2****.** Labyrinth Seals **210** (shown in cross-section) line the inside diameter of Low Pressure Turbine Case **204** forming a shroud around each rotating Blade **208,** limiting the air that spills over the tips of Blades **208.** The shape of Labyrinth Seals **210** is designed to create air turbulence between the tips of each Blade **208** and the corresponding Labyrinth Seal **210.** The air turbulence acts as a barrier to retard air from escaping around the tips of Blades **208.** It is appreciated that seals performing similar functions are often referred to by other names. Blade Tip Clearance **212,** defined as the distance between the tip of Blade **208** and Labyrinth Seal **210,** will vary over the operating points of the engine. The mechanisms behind Blade Tip Clearance **212** variations come from the displacement or distortion of both static and rotating components of the engine due to a number of loads on these components and expansion due to heat. Axis-symmetric clearance changes are due to uniform loading (centrifugal, thermal, internal pressure) on the stationary or rotating structures that create uniform radial displacement. Centrifugal and thermal loads are responsible for the largest radial variations in Blade Tip Clearance **212.**

Wear mechanisms for Labyrinth Seal **210** can be generally categorized into three major categories: rubbing (blade incursion), thermal fatigue, and erosion. Engine build clearances in both high pressure and low pressure turbine cases are chosen to limit the amount of blade rubbing. Studies have shown that improved blade tip clearances in the high pressure and low pressure turbine cases can result in significant life cycle cost ("LCC") reductions.

As a cold engine is started, a certain amount of Blade Tip Clearance **212** exists between each Labyrinth Seal **210** and the tip of Blades **208.** Blade Tip Clearance **212** is rapidly diminished as the engine speed is increased for takeoff due to the centrifugal load on Rotor **206** as well as the rapid heating of Blades 208, causing the rotating components to grow radially outward. Meanwhile, Low Pressure Turbine Case **204** expands due to heating but at a slower rate. This phenomenon can produce a minimum Blade Tip Clearance 212 "pinch point." As Low Pressure Turbine Case 204 expands due to heating after the pinch point, Blade Tip Clearance 212 increases. Shortly after Low Pressure Turbine Case 204 expansion, Rotor 20β begins to heat up (at a slower rate than Low Pressure Turbine Case 204 due to its mass) and Blade Tip Clearance 212 narrows. As the engine approaches the cruise condition, Low Pressure Turbine Case 204 and Rotor 206 reach thermal equilibrium and Blade Tip Clearance 212 remains relatively constant.

There can be tremendous benefit in narrowing Blade Tip Clearance 212 during the cruise condition. This is often where the greatest reduction in SFC can be gained (longest part of the flight profile). On the other hand, rubbing is generally to be avoided. Minimal clearance typically is maintained at takeoff to ensure thrust generation as well as keeping EGT below its established limit. Hence, it has been the goal of many control systems to attempt to maintain a minimal Blade Tip Clearance 212 while avoiding rubbing over the entire flight profile.

Engine temperatures generally play a large role in determining the operational Blade Tip Clearances 212. Gas turbine performance, efficiency, and life are directly influenced by Blade Tip Clearances 212. Tighter Blade Tip Clearances 212 can reduce air leakage over the tips of Blades 208. This can increase turbine efficiency and permit the engine to meet performance and thrust goals with less fuel bum and lower rotor inlet temperatures. Because the turbine runs at lower temperatures, while producing the same work, hot section components can have increased cycle life. The increased cycle life of hot section components can increase engine service life (TOW) by increasing the time between overhauls.

Engine SFC and EGT are generally directly related to HPTC blade tip clearance. One study has shown that for every 0.001 inch (approximately 0.025 mm) increase in HPTC blade tip clearance, SFC increases approximately 0.1%, while EGT increases one °C. Therefore, it is believed that a 0.010 inch (approximately 0.025 mm) HPTC blade tip clearance decrease may roughly produce a one% decrease in SFC and a ten 0C decrease in EGT. Military engines generally show slightly greater HPTC blade tip clearance influence on SFC and EGT due to their higher operating speeds and temperatures over large commercial engines. Improvements of this magnitude may produce large savings in annual fuel and engine maintenance costs amounting to over hundreds of millions of dollars per year.

Reducing fuel consumption may also reduce aero engine total emissions. Recent estimates indicate that Americans alone now fly 764 million trips per year (2.85 airline trips per person). The energy used by commercial aircraft has nearly doubled over the last three decades. The increased fuel consumption accounts for thirteen0/, of the total transportation sector emissions of carbon dioxide (CO2). Modern aero engine emissions are made up of over seventy-one%. CO2 with about twenty-eight% water (H2O) and 0.3% nitrogen oxide (NO2) along with trace amounts of carbon monoxide (CO), sulfur dioxide (S02), etc. Air transport accounts for 2.5% (600 million tons) of the world's CO2
Production. Emissions from land-based engines, primarily for power generation, contributes amounts in addition to these totals. Clearly a reduction in fuel burn can significantly reduce aero and land-based engine emissions.

Current large commercial engines have cycle lives (defined as the time between overhauls) that vary significantly, ranging typically between 3,000 to 10,000 cycles. The cycle life is primarily determined by how long the engine retains a positive EGT margin. New engines or newly overhauled engines are shipped with a certain cold build blade tip clearance which increases with time. As the engine operating clearances increase, the engine generally works harder (hotter) to produce the same work and is therefore less efficient. This increase in operating temperature, particularly takeoff EGT, can further promote the degradation of hot section components due to thermal fatigue. It is believed that retaining engine takeoff EGT margin by maintaining tight blade tip clearances can dramatically increase engine cycle life. This could also lead to huge savings in engine maintenance over a period of years due to the large overhaul costs.

Previous attempts at blade tip clearance management can generally be categorized by two control schemes, active clearance control ("ACC") and passive clearance control ("PCC"). PCC is defined as any system that sets the desired clearance at one operating point, namely the most severe transient condition (e.g., takeoff, re-burst, maneuver, etc.). ACC, on the other hand, is defined as any system that allows independent setting of a desired blade tip clearance at more than one operating point. The problem with PCC systems is that the minimum clearance, the pinch point, that the system must accommodate often leaves an undesired larger clearance during the much longer, steady state portion of the flight (i.e., cruise).

Typical PCC systems include better matching of rotor and stator growth throughout the flight profile, the use of abradables to limit blade tip wear, the use of stiffer materials and machining techniques to limit or create distortion of static components to maintain or improve shroud roundness at extreme conditions, and the like. Engine manufacturers began using thermal ACC systems in the late 1970's and early 1980's. These systems utilized fan air to cool the support flanges of the HPTC, reducing the case and shroud diameters, and hence blade tip clearance, during cruise conditions.

It is believed that all of the approaches described above have significant problems associated with them. Some are quite expensive, others achieve little results, especially during cruise where the greatest advantages are gained, or require actuation through the case due to the lack of current high temperature actuator capabilities, which raise secondary sealing issues and added weight and mechanical complexity.

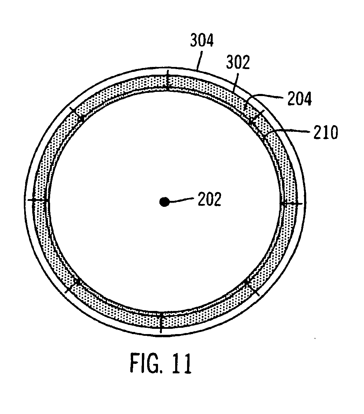

**Figure** 3 shows a sectional schematic diagram of the low pressure turbine case of **FIG. 2** fitted with stiffener rings in an embodiment of the present description. **Figure 11** shows a cross-sectional schematic diagram of the low pressure turbine case of **FIG.2** fitted with stiffener rings in an embodiment of the present description. Referring now to **FiGs. 3****,** **11****,** one or more features of the present description may be applied to existing gas turbine jet engines, or may be incorporated into the design and build of new gas turbine jet engines, for a variety of applications including aviation, marine and land-based engines. Features of the present description are applicable to the HPTC as well as the LPTC, and the description and figures in relation to the LPTC also apply equally to the HPTC and are not limited to the LPTC.

Notches **302,** which may be of several different geometries as described in detail below, are manufactured circumferentially, typically through machining, into the outside diameter of Low Pressure Turbine Case **204** to coincide with one or more locations of the Labyrinth Seals **210.** In addition to locations corresponding to one or more of the locations of the Labyrinth Seals **210,** notches may be machined circumferentially in locations corresponding to "hot spots" that have been identified in Low Pressure Turbine Case **204** through computer modeling, through monitoring surface temperatures, or through visual inspections for cracks when the engine is overhauled. For existing engines, Low Pressure Turbine Case **204** is typically removed in order to repair cracks resulting from the these "hot spots". After such repairs, groves may then be applied through a weld repair through machining. The external rings would then be shrink interference fit in the grooves. It is appreciated that the stiffener rings may be located at other positions of a turbine case, depending upon the particular application It is further appreciated that sizes, dimensions, shapes, materials and clearances may vary, depending upon the particular application.

Stiffener Rings 304 (shown in cross section in FIG. 3) are shrink interference fit into each Notch **302** so that the **Stiffener ring 304** encircles the circumferential **Notch 302 as shown** in **FIG. 11****.** Since Low Pressure Turbine Case **204** is conical in shape, each Stiffener Ring 304 may have a different diameter. In each case, the inside diameter of each Stiffener Ring 304 is slightly less than the outside diameter of its corresponding Notch **302.** Each Stiffener Ring **304** is heated, starting with the largest diameter Stiffener Ring **304.** Heating causes each Stiffener Ring **304** to expand, increasing the inside diameter to a diameter that is greater than the outside diameter of its corresponding **Notch 302.** Once positioned in Notch 302, Stiffener Ring **304** is allowed to cool, which shrinks with an interference fit into its corresponding Notch **302.**

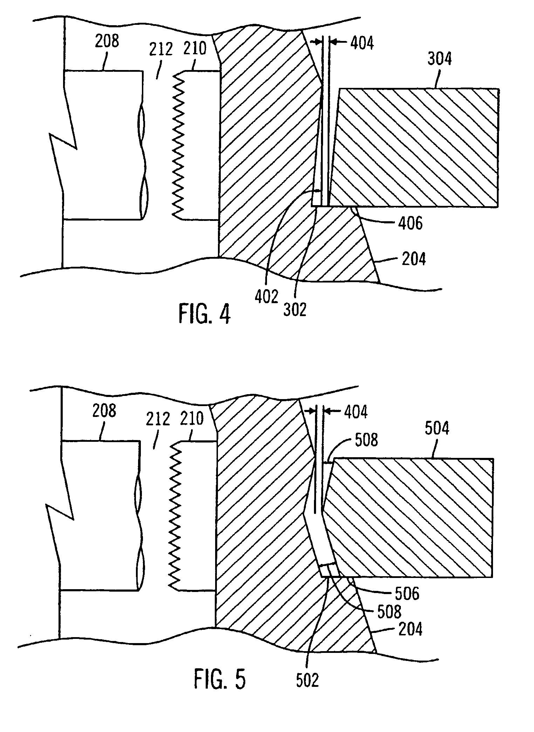

**Figure 4** shows a sectional schematic diagram of Section A of the low pressure turbine case of **FIG. 3****,** showing the stiffener ring about to be seated in an embodiment of the present description. Referring now to **FIG. 4****,** Notch **302** is manufactured circumferentially with a reverse taper relative to the taper of the low pressure turbine case in one embodiment. Angle **402** for the taper will vary from case to case, ranging from just greater than 0° for a cylindrical case to an appropriate degree that would depend upon the specific geometry of a conical case. Stiffener Ring **304** may be machined circumferentially on its inside diameter to match this same taper. Even though Stiffener Ring **304** is shrink interference fit onto Low Pressure Turbine Case **204,** the taper can add extra security so that Stiffener Ring **304** is inhibited from slipping axially on Low Pressure Turbine Case **204.** If Notch **302** was manufactured flat without the taper, there may be an increased possibility of When Stiffener Ring 304 has been heated it expands, giving rise to Ring Clearance 404, enabling Stiffener Ring 304 to be positioned as shown against Heel 406 of Notch 302. As Stiffener Ring 304 cools, it shrinks in diameter and seats itself circumferentially into Notch 302. At ambient temperature, due to the smaller diameter of the inner surface of the Stiffener Ring 304 to the diameter of the outer surface of the Notch 302, a shrink with an interference fit results, with radially compressive circumferential force being applied to Low Pressure Turbine Case 204 by Stiffener Ring 304, and tensile circumferential force is applied to Stiffener Ring 304 by Low Pressure Turbine Case 204. In one embodiment, the radially compressive forces may be centered on the axis of rotation defined by center line 202 as schematically shown by arrows in FIG. 11. In one embodiment, the radially compressive forces are applied continuously around the entire circumference of the Notch 302 and the Turbine Case 204 without interruption.

In one example, Low Pressure Turbine Case 204 may be fifty inches (approximately 1270 mm) in outside diameter at the portion where Blade 208 and Labyrinth Seal 210 are located. In one embodiment, the Stiffener Ring 304 may be fabricated as a solid, unitary or one-piece, continuous or seamless member forged or machined in a closed loop shape. In another embodiment, the Stiffener Ring 304 may be fabricated using an open loop-shaped member and bonding the ends together by welding, for example, to form a closed loop shape. Low Pressure Turbine Case 204 is made of nickel-based super alloy, such as Inconel 718, as is Stiffener Ring 304 through a forging process. Super alloy Inconel 718 is a high-strength, complex alloy that resists high temperatures and severe mechanical stress while exhibiting high surface stability, and is often used in gas turbine jet engines. It is appreciated that the stiffener ring and the turbine case may be made of a variety of materials, depending upon the particular application. Heating Stiffener Ring 304 to a calculated temperature will cause Stiffener Ring 304 to expand, yielding an appropriate Ring Clearance 404 when Low Pressure Turbine Case 204 is at ambient air temperature of approximately seventy of (approximately 21° C). Alternatively, Low Pressure Turbine Case 204 may be cooled with liquid nitrogen or other means to a calculated temperature to cause Low Pressure Turbine Case 204 to shrink in diameter, yielding an appropriate Ring Clearance 404 when Stiffener Ring 304 is at ambient air temperature of approximately seventy °F (approximately 21° C). Alternatively, an appropriate Ring Clearance 404 may be achieved through a combination of cooling Low Pressure Turbine Case 204 and heating Stiffener Ring 304, each to various calculated temperatures. Increasing or decreasing the inside diameter of Stiffener Ring 304 will result in more or less radially compressive circumferential force and tensile stress as required for a particular application, and within the stress limits of the material that Stiffener Ring 304 is made from.

In addition, the machining for Low Pressure Turbine Case 204 may be done in a first direction, such as radially, and the machining for Stiffener Ring 304 may be done in a second direction, such as axially, which is more or less perpendicular to the first direction. Since machining leaves a spiral, or record, continuous groove on the machined surfaces, the grooves on each surface will align in a cross-hatch manner to each other, increasing the frictional forces between the two surfaces and reducing the potential for movement of Stiffener Ring **304** within Notch **302,** including axial or rotational movement. The plurality of grooves on Stiffener Ring **304,** which may be made of a nickel-base super alloy for example, may be harder than the plurality of grooves on Notch **302** of Low Pressure Turbine Case **204,** which is typically made of titanium, or in other low pressure turbine casings, possibly steel or aluminum. The nickel-base super alloy grooves can dent into or form an indentation in the softer titanium, steel, or aluminum grooves. Alternatively, Stiffener Ring **304** may simply be spot welded in one or more locations to Notch 302, or bolted to one or more flanges secured to Notch **302,** to keep Stiffener Ring **304** from spinning or otherwise moving in relation to Notch **302.** Machining in cross directions may not be needed in this case.

By thus positioning Stiffener Rings **304** in the manner described, Blade Tip Clearance **212** may be improved in some applications, especially during cruise operation of the engine in some applications. An engine designer may as a result, design the engine to have a reduced blade tip clearance than may otherwise be appropriate for a given engine design absent such stiffener rings. It is also appreciated that other or different benefits, advantages, improvements or other features may be utilized alone or in combination, depending upon the particular application. In one application, the radially compressive circumferential force (represented by arrows in FIG. 11) applied by the Stiffener Rings **304** can prevent Low Pressure Turbine Case 204 from expanding due to heat as much as it would otherwise expand. In one aspect, the Stiffener Rings 304 function as a girdle for the Turbine Case 204, to inhibit expansion or going out of round and otherwise reinforce the Turbine Case 204. Stiffener Rings **304** may be made of the same material as Low Pressure Turbine Case **204,** or may be made of a different material with a lower coefficient of thermal expansion, which would increase the radially compressive circumferential force applied over that of a stiffener ring of the same material as the case as the temperature rises. The compressive forces may be sufficient to form an indentation in the turbine case such as in the Notch 302.

In many engine designs, heat is mainly dissipated from the outside surface area of Low Pressure Turbine Case **204** by convection. Another benefit which may be achieved by adding Stiffener Rings **304** to Low Pressure Turbine Case **204** is that heat may be dissipated at a greater rate because Stiffener Rings **304** can act as cooling fins, which can result in cooler operating temperatures within Low Pressure Turbine Case **204.** This cooling may also contribute to less expansion and smaller Blade Tip Clearance **212.** Also, Stiffener Rings **304** can help to maintain roundness of Low Pressure Turbine Case **204.** Again, it is appreciated that other or different benefits, advantages, improvements or other features may be utilized alone or in combination, depending upon the particular application.

**Figure 5** shows a sectional schematic diagram of a section of a low pressure turbine case showing the stiffener ring about to be seated in another embodiment of present description. Referring now to **FIG. 5****,** Notch **502** is machined circumferentially with a chevron shape in one embodiment. Angle 508 may vary by application. Stiffener Ring **504** is machined circumferentially on its inside diameter to match this same chevron shape. Even though Stiffener Ring **504** is shrink interference fit onto Low Pressure Turbine Case **204,** the chevron shape can add extra security to inhibit the Stiffener Ring **304** from slipping off of Low Pressure Turbine Case **204.** When Stiffener Ring **504** has been heated it expands, giving rise to Ring Clearance **404,** enabling Stiffener Ring **504** to be positioned as shown against Heel **506** of Notch **502.** As Stiffener Ring **504** cools, it shrinks in diameter and seats itself circumferentially into Notch **502.** At ambient temperature, due to the smaller inside diameter of Stiffener Ring 504 to the outside diameter of Notch **502,** a shrink with an interference fit results, with radially compressive circumferential force being applied to Low Pressure Turbine Case **204** by Stiffener Ring **504,** and tensile circumferential force is applied to Stiffener Ring **504** by Low Pressure Turbine Case **204.**

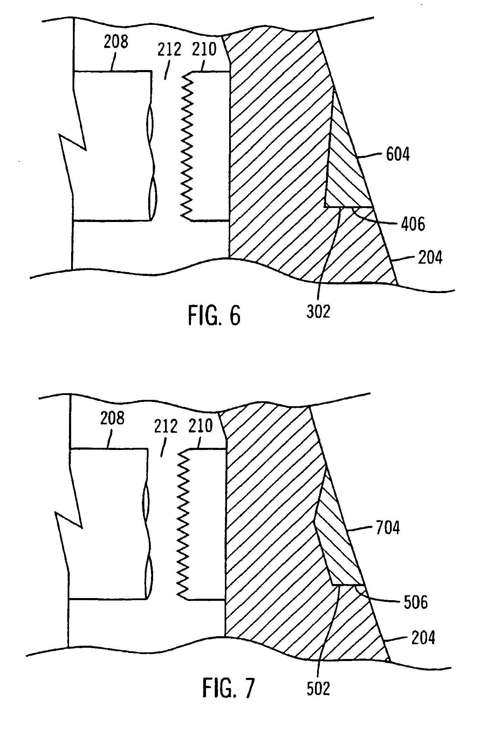

*Figure 6* shows a sectional schematic diagram of a section of a low pressure turbine case showing the stiffener ring seated in another embodiment of the present description. Referring now to **FIG. 6****,** for aero applications, where added weight to the engine is a concern, Stiffener Ring 604 is manufactured to have a profile that, when seated as shown in **FIG. 6****,** is substantially flush with the outer surface of Low Pressure Turbine Case **204.** Notch **302** with a reverse taper as shown in **FIG. 4** is machined into Low Pressure Turbine Case **204.** In addition, based on the engine to be designed or to be retrofitted, Notch 302 may be machined deeper, and/or wider, and Stiffener Ring **604** given added depth, and/or width, in order to meet the radially compressive and tensile circumferential stress requirements.

**Figure 7** shows a sectional schematic diagram of a section of a low pressure turbine case showing the stiffener ring seated in another embodiment of the present description. Referring now to **FIG. 7****,** for aero applications, where added weight to the engine is a concern, Stiffener Ring **704** is manufactured to have a profile that, when seated as shown in **FIG. 6****,** is substantially flush with the outer surface of Low Pressure Turbine Case 204. Notch **502** with a chevron shape as shown in **FIG. 5** is machined into Low Pressure Turbine Case **204.** In addition, based on the engine to be designed or to be retrofitted, Notch 502 may be machined deeper and/or wider, and Stiffener Ring **704** given added depth, and/or width, in order to meet the radially compressive and tensile stress requirements. In addition to aero or aviation applications, it is appreciated that flush embodiments as well as other embodiments may be utilized in land-based and marine applications as well.

One skilled in the art will recognize that, in addition to the reverse taper and chevron designs for the notch and stiffener ring as shown in **FIGS. 4-7****,** various other designs may be utilized to accomplish the same or similar or different goals. For example, the notch may have one or more ridges and channels, angular or undulating, that will match up with one or more channels and ridges, angular or undulating, on the inside surface of the stiffener ring. Alternatively, the notch and stiffener ring may have an inverted chevron shape. Many other such shapes may be envisioned without departing from the scope of the present description.

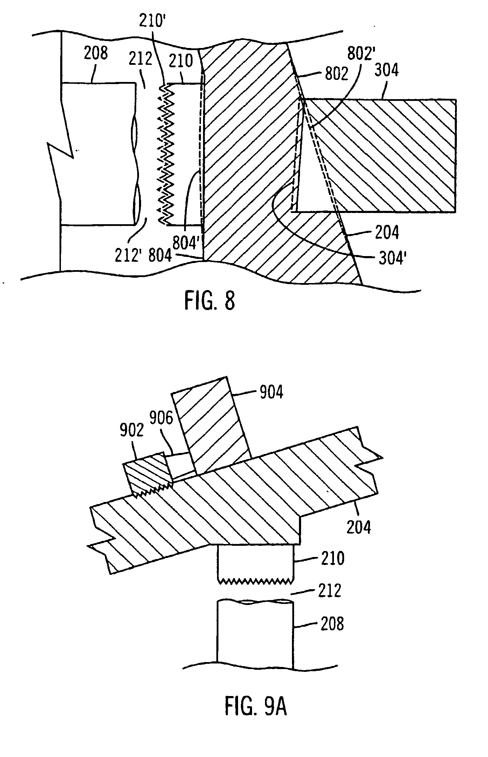

Figure 8 shows the improvement in blade tip clearance under load in an embodiment of the present description. Referring now to FIG. 8, Stiffener Ring 304 as shown in FIG. 4 has been shrink interference fit onto Low Pressure Turbine Case 204, and the engine is now under load, such as during cruise operation. Labyrinth Seal 210 and Low Pressure Turbine Case 204 with Inner Surface 802 and Outer Surface 804 are depicted with solid lines in the positions they would be in without Stiffener Ring 304. Low Pressure Turbine Case 204 would have expanded in diameter, and Labyrinth Seal 210 would have moved away from Blade 208, giving rise to a wider Blade Tip Clearance 212. However, due to the radially compressive force exerted by Stiffener Ring 304 on Low Pressure Turbine Case 204, Labyrinth Seal 210 is in the position indicated in phantom as 210', and Ring 304, Inner Surface 802 and Outer Surface 804 of Low Pressure Turbine Case 204 are in the positions indicated in phantom as 304', 802', and 804', thus reducing Blade Tip Clearance 212'.

Thus, in one aspect of the present description, the amount of expansion that would normally occur due to heating in the LPTC and the HPTC, is reduced, and consequently blade tip clearance may be improved. As stated above, increased blade tip clearance can accelerate the effects of low cycle fatigue and erosion due to increased temperatures in the HPTC and LPTC, and degrade EGT margin and engine life. In general, for large gas turbine engines, it is believed that blade tip clearance reductions on the order of 0.010 inch (approximately 0.25 mm) can produce decreases in SFC of one% and EGT of ten °C. It is believed that improved blade tip clearance of this magnitude can produce fuel and maintenance savings of over hundreds of millions of dollars per year. Reduced fuel bum can also reduce aircraft emissions, which currently account for thirteen % of the total U.S. transportation sector emissions of CO2. In another aspect, blade tip clearances can be reduced at cruise condition to make a significant impact on SFC and EGT margin and improve turbine efficiency. Moreover, the increased outer surface area of the HPTC and LPTC due to the stiffener rings can, in certain embodiments, increase cooling and result in lower internal temperatures which can lengthen the cycle life of the engine. In yet another aspect, an increase in payload per engine may be achieved due to the improvement in blade tip clearance. Additional pounds of freight may be transported per takeoff and landing. It is further appreciated that features of the present description could readily replace expensive passive clearance control options. It is appreciated that reductions in one or more of out-of- roundness, blade tip clearance, SFC, EGT or polluting emissions may be achieved utilizing one or more features herein described. For example, fabricating a stiffener ring from a material having a lower coefficient of thermal expansion than that of the turbine case material, may facilitate achieving one or more of these or other reductions. Similarly, it is appreciated that one or more of these reductions or other benefits may be achieved fabricating a turbine case and stiffener ring of the same material.

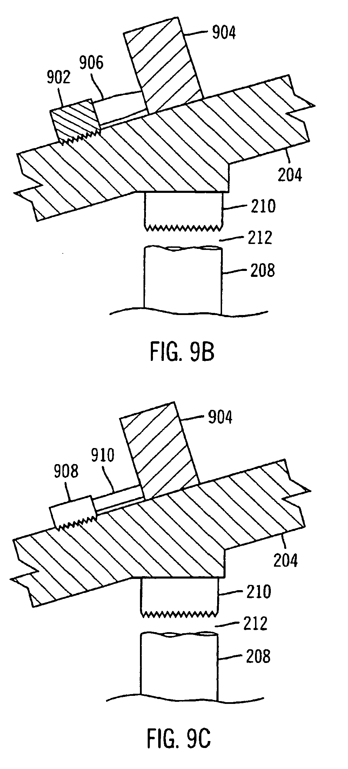

FIGS. 9A, 9B, and 9C show sectional schematic diagrams of a section of a low pressure turbine case having the stiffener ring positioned on the low pressure turbine case with a hydraulic nut and secured with a locking nut. Referring now to **FIG. 9A****,** Stiffener Ring **904** is sized to fit without pressure in a location near an internal Blade **208** and Labyrinth Seal **210,** or previously identified "hot spot", and placed in position there. Next, a Hydraulic Nut **902** is threadably mounted to Low Pressure Turbine Case 204. Hydraulic Nut 902 has Piston 906 which engages with Stiffener Ring **904.**

In **FIG. 9B****,** Piston **906** has extended from Hydraulic Nut **902,** pushing Stiffener Ring **904** toward the larger diameter end of Low Pressure Turbine Case **204,** thus positioning Stiffener Ring **904** in the optimum location in relation to the internal Blade **208** and Labyrinth Seal **210** and resulting in an interference fit. The amount that Piston **906** is extended by Hydraulic Nut 902 is calculated to produce a desired compressive circumferential force by Stiffener Ring **904.**

In **FIG. 9C****,** Hydraulic Nut **902** has been removed, and Locking Nut **908** has been threadably attached in its place onto Low Pressure Turbine Case **204.** Retainer **910** of Locking Nut **908** engages with Stiffener Ring **904,** thus securing Stiffener Ring **904** in place. This process is repeated for as many stages as required based upon turbine design. This example may add excessive weight and would most likely be best suited for land based applications where weight is not of such concern.

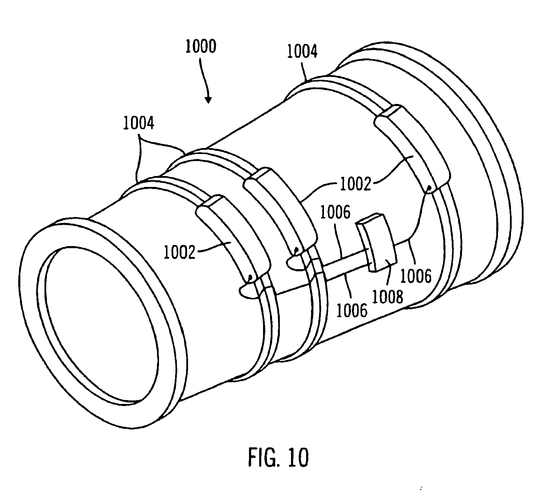

**FIG. 10** shows a schematic diagram of a low pressure turbine case having prior art stiffener rings actuated by hydraulic, electric, or other means . Referring now to **FIG. 10****,** Low Pressure Turbine Case **1000** has Stiffener C-Rings **1004** positioned at predetermined locations to coincide with blade/labyrinth seals and/or "hot spots". In this example Stiffener C-Rings 1004 are not shrink interference fit onto Low Pressure Turbine Case **1000.** A notch for each Stiffener C-Ring **1004** may still be machined into Low Pressure Turbine Case **1000,** but the stiffener rings are c-rings rather than continuous rings. Each end of Stiffener C-Ring **1004** is linked to an Actuator Means **1002,** which when actuated, pulls each end of Stiffener C-Ring **1004** together, exerting compressive force including radially compressive force on Low Pressure Turbine Case **1000.** The inside surface of each Stiffener C-Ring **1004,** or the notch surface, or both, may be coated with Teflon® or some other lubricating substance to facilitate slippage when tightened.

Each Actuator Means **1002** is connected to Controller **1008** through Electrical/Electronic Connections **1006.** Controller **1008** receives temperature readings from multiple temperature sensors located near each Stiffener C-Ring **1004** (not shown). It is also possible to derive the LPTC temperature from EGT temperature readings and use these readings for feedback to Controllers **1008.** As the temperatures being monitored throughout Low Pressure Turbine Case **1000** rise, Controller **1008** processes the temperature data and determines how much each of the ends of each Stiffener C-Ring **1004** need to be pulled together by each Actuator Means **1002** in order to exert the proper compressive circumferential force on Low Pressure Turbine Case **1000** to provide a suitable benefit such as maintaining an optimum blade tip clearance or counterbalancing a "hot spot", for example.

In an alternate example, instead of a c-ring, a chain-like multiple segmented ring may be coupled together by Actuator Means **1002.** In another example, the stiffener rings may be made of a strip of non-metallic material, such as Kevlar®. The inside surface of the Kevlar®, or the notch surface, or both may also be coated with Teflon® or some other lubricating substance to facilitate slippage when tightened.

Having described various features, it will be understood by those skilled in the art that many and widely differing embodiments and applications will suggest themselves without departing from the scope of the claims.

## Claims

1. A turbine case reinforcement method, comprising:
(a) machining at least one notch (302) circumferentially at a predetermined location into an outer surface of a turbine case (204) of a gas turbine jet engine (100); and
(b) seating a stiffener ring (304) in each said at least one notch (302) through a shrink interference fit;
wherein said stiffener ring (304) applies compressive circumferential force to said turbine case (204).

2. The method according to claim 1 wherein said seating further comprises:
heating said stiffener ring (304) to cause a first inside diameter of said stiffener ring to increase to a second inside diameter that is larger than an outside diameter of said at least one notch (302) at an ambient temperature;
positioning said stiffener ring (304) in said at least one notch (302); and
allowing said stiffener ring (304) to cool to said ambient temperature, causing said stiffener ring (304) to decrease from said second inside diameter toward said first inside diameter, but resisted by said outside diameter of said at least one notch (302), giving rise to said shrink interference fit.

3. The method according to claim 1 wherein said seating further comprises:
cooling said turbine case (204) to cause a first outside diameter of said at least one notch (302) to decrease to a second outside diameter that is smaller than
an inside diameter of said stiffener ring (304) at an ambient temperature;
positioning said stiffener ring (304) in said at least one notch (302); and
allowing said turbine case (204) to heat up to said ambient temperature, causing said at least one notch (302) to increase from said second outside diameter toward said first outside diameter, but resisted by said inside diameter of said stiffener ring (304), giving rise to said shrink interference fit.

4. The method according to claim 1 wherein said seating further comprises:
heating said stiffener ring (304) to cause a first inside diameter of said stiffener ring (304) to increase to a second inside diameter;
cooling said turbine case (204) to cause a first outside diameter of said at least one notch (302) to decrease to a second outside diameter that is smaller than said second diameter of said stiffener ring (304);
positioning said stiffener ring (304) in said at least one notch (302);
allowing said stiffener ring (304) to cool to ambient temperature; and
allowing said turbine case (204) to heat up to said ambient temperature;
wherein said stiffener ring (304) decreases from said second inside diameter toward said first inside diameter, and said at least one notch (302) increases from said second outside diameter toward said first outside diameter, giving rise to said shrink interference fit.

5. The method according to claim 1 wherein said machining further comprises:
machining said at least one notch (302) circumferentially into an outer surface of said turbine case (204) at a location coinciding with a labyrinth seal on an inner surface of said turbine case (204).

6. The method according to claim 1 wherein said machining further comprises:
machining said at least one notch (302) circumferentially into an outer surface of said turbine case (204) at a location coinciding with a hot spot of said turbine case (204).

7. The method according to claim 1 further comprising:
machining said stiffener ring (304) to a predetermined shape to match with a shape of said at least one notch (302).

8. The method according to claim 7 wherein said notch (302) machining comprises machining said at least one notch (302) circumferentially at said predetermined location into said outer surface of said turbine case (204) with a reverse taper; and wherein said stiffener ring (304) machining comprises machining said stiffener ring (304) on an inside diameter to match said reverse taper of said at least one notch (302).

9. The method according to claim 7 wherein said notch (302) machining comprises machining said at least one notch (302) circumferentially at said predetermined location into said outer surface of said turbine case (204) with a chevron shape; and
wherein said stiffener ring (304) machining comprises machining said stiffener ring (304) on an inside diameter to match said chevron shape of said at least one notch (302).

10. The method according to claim 7 wherein said stiffener ring (304) machining comprises machining a top surface of said stiffener ring (304) so that when said stiffener ring (304) is seated in said at least one notch (302), said top surface of said stiffener ring (304) is flush with said outer surface of said turbine case (204).

11. The method according to claim 7 wherein said stiffener ring (304) machining comprises machining said stiffener ring (304) from a nickel-base super alloy.

12. The method according to claim 7 wherein said stiffener ring (304) machining comprises machining said stiffener ring (304) from a material that is different from a material of said turbine case (204), said material of said stiffener ring (304) having a lower coefficient of expansion than said material of said turbine case (204).

13. A method according to claim 7 wherein said notch machining comprises machining said at least one notch (302) into said outer surface of said turbine case (204) in a first direction, wherein a plurality of grooves are formed and aligned on said outer surface in said first direction; and
wherein said stiffener ring (304) machining comprises machining an inner surface of said stiffener ring (304) in a second direction, wherein a plurality of grooves are formed and aligned on said inner surface in said second direction;
wherein when said outer surface of said at least one notch (302) and said inner surface of said stiffener ring (304) are seated together, said plurality of grooves on said outer surface of said at least one notch (302) and said plurality of grooves on said inner surface of said stiffener ring (304) align in a cross-hatch manner to each other, increasing the frictional forces between said at least one notch (302) and said stiffener ring (304) and reducing the potential for spinning of said stiffener ring (304) within said at least one notch (302).

14. An apparatus for use in a gas turbine jet engine, the apparatus comprising:
a turbine case (204) having an outer surface which defines at least one notch (302) machined circumferentially into said outer surface of said turbine case (204) of said gas turbine jet engine at a predetermined location; and
a stiffener ring (304) seated in each said at least one notch (302) through a shrink interference fit;
wherein said stiffener ring (304) applies compressive circumferential force to said turbine case (204).

15. The apparatus according to claim 14 further comprising:
a means for heating said stiffener ring (304) to cause a first inside diameter of said stiffener ring (304) to increase to a second inside diameter that is larger than an outside diameter of said at least one notch (302) at an ambient temperature, wherein after said stiffener ring (304) is positioned in said at least one notch (302), said
stiffener ring (304) is allowed to cool to said ambient temperature, causing said stiffener ring (304) to decrease from said second inside diameter toward said first inside diameter, but resisted by said outside diameter of said at least one notch (302), giving rise to said shrink interference fit.

16. The apparatus according to claim 14 further comprising:
a means for cooling said turbine case (204) to cause a first outside diameter of said at least one notch (302) to decrease to a second outside diameter that is smaller than an inside diameter of said stiffener ring (304) at an ambient temperature, wherein after said stiffener ring (304) is positioned in said at least one notch (302), said turbine case (204) is allowed to heat up to said ambient temperature, causing said at least one notch (302) to increase from said second outside diameter toward said first outside diameter, but resisted by said inside diameter of said stiffener ring (304), giving rise to said shrink interference fit.

17. The apparatus according to claim 14 further comprising:
a means for heating said stiffener ring (304) to cause a first inside diameter of said stiffener ring (304) to increase to a second inside diameter; and
a means for cooling said turbine case (204) to cause a first outside diameter of said at least one notch (302) to decrease to a second outside diameter that is smaller than said second diameter of said stiffener ring (304), wherein after said stiffener ring (304) is positioned in said at least one notch (302), said stiffener ring (304) is allowed to cool to ambient temperature and said turbine case (204) is allowed to heat up to said ambient temperature, causing said stiffener ring (304) to decrease from said second inside diameter toward said first inside diameter, and said at least one notch (302) to increase from said second outside diameter toward said first outside diameter, giving rise to said shrink interference fit.

18. The apparatus according to claim 14 wherein said predetermined location for machining said at least one notch (302) circumferentially into said outer surface of said turbine case (204) is at a location coinciding with a labyrinth seal on an inner surface of said turbine case (204) .

19. The apparatus according to claim 14 wherein said predetermined location for machining said at least one notch (302) circumferentially into said outer surface of said turbine case (204) is at a location coinciding with a hot spot of said turbine case (204).

20. The apparatus according to claim 14 wherein said stiffener ring (304) further comprises a predetermined shape machined to match with a shape of said at least one notch (302).

21. The apparatus according to claim 14 wherein said notch (302) has a reverse taper machined into said at least one notch (302); and wherein said stiffener ring (304) has a matching reverse taper machined on an inside diameter of said stiffener ring (304).

22. The apparatus according to claim 14 further comprising:
a chevron shape machined into said at least one notch (302); and
a matching chevron shape machined on an inside diameter of said stiffener ring (304).

23. The apparatus according to claim 14 wherein said stiffener ring (304) further comprises:
a top surface of said stiffener ring (304) machined so that when said stiffener ring (304) is seated in said at least one notch (302), said top surface of said stiffener ring (302) is flush with said outer surface of said turbine case (204).

24. The apparatus according to claim 14 wherein said stiffener ring (304) is machined from a nickel-base super alloy.

25. The apparatus according to claim 14 wherein said stiffener ring (304) is machined from a material that is different from a material of said turbine case (204), said material having a lower coefficient of thermal expansion than said material of said turbine case (204).

26. The apparatus according to claim 14 further wherein said at least one notch (302) of said turbine case (204) has a machined outer surface which defines a plurality of grooves aligned in a first direction on said machined outer surface of said at least one notch (302); and
wherein said stiffener ring (304) has a machined inner surface which defines a plurality of grooves aligned in a second direction on said machined inner surface of said stiffener ring (304);
wherein when said outer surface of said at least one notch (302) and said inner surface of said stiffener ring (304) are interference shrink fit together, said plurality of grooves on said outer surface of said at least one notch (302) and said plurality of grooves on said inner surface of said stiffener ring (304) align in a cross-hatch manner to each other, increasing the frictional forces between said at least one notch (302) and said stiffener ring (304) and reducing the potential for spinning of said stiffener ring (304) within said at least one notch (302).

## Patentansprüche

1. Verfahren zur Verstärkung eines Turbinengehäuses, welches die Folgenden Schritte aufweist:
(a) Maschinelle Herstellung mindestens einer Einkerbung (302) umlaufend an einer vorgegebenen Stelle in einer Außenfläche eines Turbinengehäuses (204) eines Gasturbinenstrahltriebwerks (100); und
(b) Lagern eines Versteifungsrings (304) in jeder der mindestens einen Einkerbung (302) durch Schrumpfpassung;
**dadurch gekennzeichnet, dass** der Versteifungsring (304) eine umlaufende Druckkraft auf das Turbinengehäuse (204) aufbringt.

2. Verfahren nach Anspruch 1, **dadurch gekennzeichnet, dass** der Schritt der Lagerung des Weiteren die folgenden Schritte aufweist:
Erwärmen des Versteifungsrings (304), um zu bewirken, dass sich ein erster Innendurchmesser des Versteifungsrings auf einen zweiten Innendurchmesser vergrößert bzw. ausdehnt, welcher bei Umgebungstemperatur größer ist als ein Außendurchmesser der mindestens einen Einkerbung (302);
Positionieren des Versteifungsrings (304) in der mindestens einen Einkerbung (302); und
Zulassen, dass sich der Versteifungsring (304) auf die Umgebungstemperatur abkühlt, wobei bewirkt wird, dass sich der zweite Innendurchmesser des Versteifungsrings (304) zu dem ersten Innendurchmesser hin verringert, wobeii jedoch der Außendurchmesser der mindestens einen Einkerbung (302) Widerstand leistet, was die Schrumpfpassung zur Folge hat.

3. Verfahren nach Anspruch 1, **dadurch gekennzeichnet, dass** der Schritt der Lagerung des Weiteren die folgenden Schritte aufweist:
Abkühlen des Turbinengehäuses (204), um zu bewirken, dass sich ein erster Außendurchmesser der mindestens einen Einkerbung (302) auf einen zweiten Außendurchmesser verringert, welcher bei Umgebungstemperatur kleiner ist als ein Innendurchmesser des Versteifungsrings (304);
Positionieren des Versteifungsrings (304) in der mindestens einen Einkerbung (302); und
Zulassen, dass sich das Turbinengehäuse (204) auf die Umgebungstemperatur erwärmt, wodurch bewirkt wird, dass sich der zweite Außendurchmesser der mindestens einen Einkerbung (302) zu dem ersten Außendurchmesser hin ausdehnt, wobei jedoch der Innendurchmesser des Versteifungsrings (304) Widerstand leistet, was die Schrumpfpassung zur Folge hat.

4. Verfahren nach Anspruch 1, **dadurch gekennzeichnet, dass** die Lagerung des Weiteren die folgenden Schritte aufweist:
Erwärmen des Versteifungsrings (304), um zu bewirken, dass sich ein erster Innendurchmesser des Versteifungsrings auf einen zweiten Innendurchmesser ausdehnt;
Abkühlen des Turbinengehäuses (204), um zu bewirken, dass sich ein erster Auβendurchmesser der mindestens einen Einkerbung (302) auf einen zweiten Außendurchmesser verringert, welcher kleiner ist als der zweite Durchmesser des Versteifungsrings (304);
Positionieren des Versteifungsrings (304) in der mindestens einen Einkerbung (302);
Zulassen, dass sich der Versteifungsring (304) auf Umgebungstemperatur abkühlt; und
Zulassen, dass sich das Turbinengehäuse (204) auf Umgebungstemperatur erwärmt;
wobei sich der zweite Innendurchmesser des Versteifungsrings (304) zu dem ersten Innendurchmesser hin verringert, und wobei sich der zweite Außendurchmesser der mindestens einen Einkerbung (302) zu dem ersten Außendurchmesser hin ausdehnt, was die Schrumpfpassung zur Folge hat.

5. Verfahren nach Anspruch 1, **dadurch gekennzeichnet, dass** der Schritt der maschinellen Herstellung des Weiteren den folgenden Schritt aufweist:
maschinelle Herstellung der mindestens einen Einkerbung (302) umlaufend in einer Außenfläche des Turbinengehäuses (204) an einer Stelle, welche mit einer Labyrinth-Dichtung auf einer Innenfläche bzw. -seite des Turbinengehäuses (204) übereinstimmt.

6. Verfahren nach Anspruch 1, **dadurch gekennzeichnet, dass** die maschinelle Herstellung des Weiteren den folgenden Schritt aufweist:
maschinelle Herstellung der mindestens einen Einkerbung (302) umlaufend in einer Außenfläche des Turbinengehäuses (204) an einer Stelle, welche mit einem kritischen Lastpunkt des Turbinengehäuses (204) übereinstimmt.

7. Verfahren nach Anspruch 1, welches des Weiteren den folgenden Schritt aufweist:
maschinelle Herstellung des Versteifungsrings (304) in einer vorgegebenen Form, damit diese einer Form der mindestens einen Einkerbung (302) gleichkommt.

8. Verfahren nach Anspruch 7, **dadurch gekennzeichnet, dass** die maschinelle Herstellung der Einkerbung (302) die maschinelle Herstellung der mindestens einen Einkerbung (302) umlaufend an der vorgegebenen Stelle in der Außenfläche des Turbinengehäuses (204) mit umgekehrter Konizität aufweist; und dass die maschinelle Herstellung des Versteifungsrings (304) die maschinelle Herstellung des Versteifungsrings (304) auf einem Innendurchmesser aufweist, damit dieser der umgekehrten Konizität der mindestens einen Einkerbung (302) gleichkommt.

9. Verfahren nach Anspruch 7, **dadurch gekennzeichnet, dass** die maschinelle Herstellung der Einkerbung (302) die maschinelle Herstellung der mindestens einen Einkerbung (302) umlaufend an der vorgegebenen Stelle in der Außenfläche des Turbinengehäuses (204) in einer Zick-Zack-Form aufweist; und
dass die maschinelle Herstellung des Versteifungsrings (304) die maschinelle Herstellung des Versteifungsrings (304) auf einem Innendurchmesser aufweist, damit dieser der Zick-Zack-Form der mindestens einen Einkerbung (302) gleichkommt.

10. Verfahren nach Anspruch 7, **dadurch gekennzeichnet, dass** die maschinelle Herstellung des Versteifungsrings (304) die maschinelle Herstellung einer Oberseite bzw. Oberfläche des Versteifungsrings (304) derart aufweist, dass bei Lagerung des Versteifungsrings (304) in der mindestens einen Einkerbung (302) die Oberseite bzw. Oberfläche des Versteifungsrings (304) auf gleicher Ebene bzw. bündig mit der Außenfläche des Turbinengehäuses (204) ist.

11. Verfahren nach Anspruch 7, **dadurch gekennzeichnet, dass** die maschinelle Herstellung des Versteifungsrings (304) die maschinelle Herstellung des Versteifungsrings (304) aus einer Superlegierung auf Nickelbasis aufweist.

12. Verfahren nach Anspruch 7, **dadurch gekennzeichnet, dass** die maschinelle Herstellung des Versteifungsrings (304) die maschinelle Herstellung des Versteifungsrings (304) aus einem Werkstoff aufweist, welcher sich von einem Werkstoff des Turbinengehäuses (204) unterscheidet, wobei der Werkstoff des Versteifungsrings (304) einen niedrigeren Wärmeausdehnungskoeffizienten aufweist als der Werkstoff des Turbinengehäuses (204).

13. Verfahren nach Anspruch 7, **dadurch gekennzeichnet, dass** die maschinelle Herstellung der Einkerbung die maschinelle Herstellung der Einkerbung (302) in der Außenfläche des Turbinengehäuses (204) in einer ersten Richtung aufweist, wobei eine Vielzahl von Nuten auf der Außenfläche in dieser ersten Richtung ausgebildet und ausgerichtet sind; und
dass die maschinelle Herstellung des Versteifungsrings (304) die maschinelle Herstellung einer Innenfläche des Versteifungsrings (304) in einer zweiten Richtung aufweist, wobei eine Vielzahl von Nuten auf der Innenfläche in dieser zweiten Richtung ausgebildet und ausgerichtet sind;
dass wenn die Außenfläche der mindestens einen Einkerbung (302) und die Innenfläche des Versteifungsrings (304) aneinander gelagert sind bzw. nebeneinander liegen, die Vielzahl von Nuten auf der Außenfläche der mindestens einen Einkerbung (302) und die Vielzahl von Nuten auf der Innenfläche des Versteifungsrings (304) in gitterschnittartiger Weise zueinander fluchten, wobei die Reibkräfte zwischen der mindestens einen Einkerbung (302) und dem Versteifungsring (304) zunehmen und das Potential zur Drehung des Versteifungsrings (304) in der mindestens einen Einkerbung (302) abnimmt.

14. Vorrichtung zur Verwendung in einem Gasturbinenstrahltriebwerk, wobei die Vorrichtung Folgendes aufweist:
ein Turbinengehäuse (204) mit einer Außenfläche, welche mindestens eine Einkerbung (302) begrenzt, welche umlaufend in der Außenfläche des Turbinengehäuses (204) des Gasturbinenstrahltriebwerks an einer vorgegebenen Stelle maschinell hergestellt ist; und
einen Versteifungsring (304), welcher in jeder der mindestens einen Einkerbung (302) durch Schrumpfpassung gelagert ist;
**dadurch gekennzeichnet, dass** der Versteifungsring (304) eine umlaufende Druckkraft auf das Turbinengehäuse (204) aufbringt.

15. Vorrichtung nach Anspruch 14, welche des Weiteren Folgendes aufweist:
eine Einrichtung zur Erwärmung des Versteifungsrings (304), um zu bewirken, dass sich ein erster Innendurchmesser des Versteifungsrings (304) auf einen zweiten Innendurchmesser ausdehnt, welcher bei Umgebungstemperatur größer ist als ein Außendurchmesser der mindestens einen Einkerbung (302), **dadurch gekennzeichnet, dass** nach der Positionierung des Versteifungsrings (304) in der mindestens einen Einkerbung (302) zugelassen wird, dass sich der Versteifungsring (304) auf die Umgebungstemperatur abkühlt, wodurch bewirkt wird, dass sich der zweite Innendurchmesser des Versteifungsrings (304) zu dem ersten Innendurchmesser hin verringert, wobei jedoch der Außendurchmesser der mindestens einen Einkerbung (302) Widerstand leistet, was die Schrumpfpassung zur Folge hat.

16. Vorrichtung nach Anspruch 14, welche des Weiteren Folgendes aufweist:
eine Einrichtung zur Abkühlung des Turbinengehäuses (204), um zu bewirken, dass sich ein erster Außendurchmesser der mindestens einen Einkerbung (302) auf einen zweiten Außendurchmesser verringert, welcher bei Umgebungstemperatur kleiner ist als ein Innendurchmesser des Versteifungsrings (304), **dadurch gekennzeichnet, dass** nach der Positionierung des Versteifungsrings (304) in der mindestens einen Einkerbung (302) zugelassen wird, dass sich das Turbinengehäuse (204) auf die Umgebungstemperatur erwärmt, wodurch bewirkt wird, dass sich der zweite Außendurchmesser der mindestens einen Einkerbung (302) zu dem ersten Außendurchmesser hin vergrößert, wobei jedoch der Innendurchmesser des Versteifungsrings (304) Widerstand leistet, was die Schrumpfpassung zur Folge hat.

17. Vorrichtung nach Anspruch 14, welche des Weiteren Folgendes aufweist:
eine Einrichtung zur Erwärmung des Versteifungsrings (304), um zu bewirken, dass sich ein erster Innendurchmesser des Versteifungsrings (304) auf einen zweiten Innendurchmesser ausdehnt; und
eine Einrichtung zur Abkühlung des Turbinengehäuses (204), um zu bewirken, dass sich ein erster Außendurchmesser der mindestens einen Einkerbung (302) auf einen zweiten Außendurchmesser verringert, welcher kleiner ist als der zweite Durchmesser des Versteifungsrings (304), **dadurch gekennzeichnet, dass** nach der Positionierung des Versteifungsrings (304) in der mindestens einen Einkerbung (302) zugelassen wird, dass sich der Versteifungsring (304) auf Umgebungstemperatur abkühlt, und zugelassen wird, dass sich das Turbinengehäuse (204) auf Umgebungstemperatur erwärmt, wodurch bewirkt wird, dass sich der zweite Innendurchmesser des Versteifungsrings (304) zu dem ersten Innendurchmesser hin verringert, und sich der zweite Außendurchmesser der mindestens einen Einkerbung (302) zu dem ersten Außendurchmesser hin ausdehnt, was die Schrumpfpassung zur Folge hat.

18. Vorrichtung nach Anspruch 14, **dadurch gekennzeichnet, dass** die vorgegebene Stelle zur maschinellen Herstellung der mindestens einen Einkerbung (302) umlaufend in der Außenfläche des Turbinengehäuses (204) an einer Stelle liegt, welche mit einer Labyrinth-Dichtung auf einer Innenfläche des Turbinengehäuses (204) übereinstimmt.

19. Vorrichtung nach Anspruch 14, **dadurch gekennzeichnet, dass** die vorgegebene Stelle zur maschinellen Herstellung der mindestens einen Einkerbung (302) umlaufend in der Außenfläche des Turbinengehäuses (204) an einer Stelle liegt, welche mit einem kritischen Lastpunkt des Turbinengehäuses (204) übereinstimmt.

20. Vorrichtung nach Anspruch 14, **dadurch gekennzeichnet, dass** der Versteifungsring (304) des Weiteren eine vorgegebene Form aufweist, welche derart maschinell hergestellt ist, dass sie einer Form der mindestens einen Einkerbung (302) gleichkommt.

21. Vorrichtung nach Anspruch 14, **dadurch gekennzeichnet, dass** die Einkerbung (302) einen inversen Konus bzw. umgekehrte Konizität aufweist, welche in der mindestens einen Einkerbung (302) maschinell hergestellt ist; und dass der Versteifungsring (304) eine übereinstimmende bzw. passende umgekehrte Konizität aufweist, welche auf einem Innendurchmesser des Versteifungsrings (304) maschinell herstellt ist.

22. Vorrichtung nach Anspruch 14, welche des Weiteren Folgendes aufweist:
eine Zick-Zack-Form, welche in der mindestens einen Einkerbung (302) maschinell hergestellt ist; und
eine übereinstimmende bzw. passende Zick-Zack-Form, welche auf einem Innendurchmesser des Versteifungsrings (304) maschinell hergestellt ist.

23. Vorrichtung nach Anspruch 14, **dadurch gekennzeichnet, dass** der Versteifungsring (304) des Weiteren Folgendes aufweist:
eine Oberfläche bzw. Oberseite des Versteifungsrings (304), welche derart maschinell hergestellt ist, dass die Oberfläche bzw. Oberseite des Versteifungsrings (304) bei Lagerung des Versteifungsrings (304) in der mindestens einen Einkerbung (302) auf einer Ebene bzw. bündig mit der Außenfläche des Turbinengehäuses (204) ist.

24. Vorrichtung nach Anspruch 14, **dadurch gekennzeichnet, dass** der Versteifungsring (304) aus einer Superlegierung auf Nickelbasis maschinell hergestellt ist.

25. Vorrichtung nach Anspruch 14, **dadurch gekennzeichnet, dass** der Versteifungsring (304) aus einem Werkstoff maschinell hergestellt ist, welcher sich von einem Werkstoff des Turbinengehäuses (204) unterscheidet, wobei der Werkstoff des Versteifungsrings (304) einen niedrigeren Wärmeausdehnungskoeffizienten als der Werkstoff des Turbinengehäuses (204) aufweist.

26. Vorrichtung nach Anspruch 14, **dadurch gekennzeichnet, dass** die mindestens eine Einkerbung (302) des Turbinengehäuses (204) eine maschinell hergestellte Außenfläche aufweist, welche eine Vielzahl von Nuten begrenzt, welche in einer ersten Richtung auf der maschinell hergestellten Außenfläche der mindestens einen Einkerbung (302) axial ausgerichtet sind; und
dass der Versteifungsring (304) eine maschinell hergestellte Innenfläche aufweist, welche eine Vielzahl von Nuten begrenzt, welche in einer zweiten Richtung auf der maschinell hergestellten Innenfläche des Versteifungsrings (304) axial ausgerichtet sind;
wobei die Außenfläche der mindestens einen Einkerbung (302) und die Innenfläche des Versteifungsrings (304) durch Schrumpfpassung verbunden sind, wobei die Vielzahl von Nuten auf der Außenfläche der mindestens einen Einkerbung (302) und die Vielzahl von Nuten auf der Innenfläche des Versteifungsrings (304) in gitterschnitt-artiger Weise axial zueinander ausgerichtet sind bzw. fluchten, wobei die Reibkräfte zwischen der mindestens einen Einkerbung (302) und dem Versteifungsring (304) zunehmen und das Potential zur Drehung des Versteifungsrings (304) innerhalb der mindestens einen Einkerbung (302) reduziert wird.

## Revendications

1. Procédé de renforcement de carter de turbine, comprenant:
(a) usiner au moins une encoche (302) circonférentiellement à un emplacement prédéterminé dans une surface extérieure d'un carter de turbine (204) d'un moteur propulseur à turbine à gaz (100); et
(b) placer une bague de raidissement (304) dans chacune desdites au moins une encoche (302) par un ajustement à retrait avec serrage;
où ladite bague de renforcement (304) applique une force circonférentielle de compression audit carter de turbine (204).

2. Procédé selon la revendication 1, dans lequel ladite mise en place comprend en outre:
chauffer ladite bague de raidissement (304) pour amener un premier diamètre intérieur de ladite bague de raidissement à augmenter à un deuxième diamètre intérieur qui est plus grand que le diamètre extérieur de ladite au moins une encoche (302) à température ambiante;
positionner ladite bague de raidissement (304) dans ladite au moins une encoche (302); et
amener ladite bague de raidissement (304) à se refroidir à ladite température ambiante, amener ladite bague de raidissement (304) à diminuer dudit deuxième diamètre intérieur vers ledit premier diamètre intérieur, sous la résistance dudit diamètre extérieur de ladite au moins une encoche (302), donnant lieu audit ajustement à retrait avec serrage.

3. Procédé selon la revendication 1, dans lequel ladite mise en place comprend en outre:
refroidir ledit carter de turbine (204) pour amener un premier diamètre extérieur de ladite au moins une encoche (302) à diminuer à un second diamètre extérieur qui est plus petit qu'un diamètre intérieur de ladite bague de raidissement (304) à température ambiante;
positionner ladite bague de raidissement (304) dans ladite au moins une encoche (302); et
amener ledit carter de turbine (204) à s'échauffer à ladite température ambiante, en amenant ladite au moins une encoche (302) à augmenter dudit deuxième diamètre extérieur vers ledit premier diamètre extérieur, mais sous la résistance dudit diamètre intérieur de ladite bague de raidissement (304), donnant lieu audit ajustement à retrait avec serrage.

4. Procédé selon la revendication 1, dans lequel ladite mise en place comprend en outre:
chauffer ladite bague de raidissement (304) pour amener un premier diamètre intérieur de ladite bague de raidissement (304) à augmenter à un second diamètre intérieur;
refroidir ledit carter de turbine (204) pour amener un premier diamètre extérieur de ladite au moins une encoche (302) à diminuer à un second diamètre extérieur qui est plus petit que ledit second diamètre de ladite bague de raidissement (304);
positionner ladite bague de raidissement (304) dans ladite au moins une encoche (302);
amener ladite bague de raidissement (304) à se refroidir à la température ambiante; et
amener ledit carter de turbine (204) à s'échauffer à ladite température ambiante;
où ladite bague de raidissement (304) diminue dudit second diamètre intérieur vers ledit premier diamètre intérieur, et ladite au moins une encoche (302) augmente dudit second diamètre extérieur vers ledit premier diamètre extérieur en donnant lieu audit ajustement à retrait avec serrage.

5. Procédé selon la revendication 1, dans lequel ledit usinage comprend en outre:
usiner ladite au moins une encoche (302) circonférentiellement dans une surface extérieure dudit carter de turbine (204) à un emplacement coïncidant avec un joint de labyrinthe sur une surface intérieure dudit carter de turbine (204).

6. Procédé selon la revendication 1, dans lequel ledit usinage comprend en outre:
usiner ladite au moins une encoche (302) circonférentiellement dans une surface extérieure dudit carter de turbine (204) à un emplacement coïncidant avec un point chaud dudit carter de turbine (204).

7. Procédé selon la revendication 1, comprenant en outre:
usiner ladite bague de raidissement (304) en une forme prédéterminée pour qu'elle corresponde à la forme de ladite au moins une encoche (302).

8. Procédé selon la revendication 7, dans lequel l'usinage de ladite encoche (302) comprend l'usinage de ladite au moins une encoche (302) circonférentiellement audit emplacement prédéterminé dans ladite surface extérieure dudit carter de turbine (204) avec un cône inversé; et où ledit usinage de la bague de raidissement (304) comprend l'usinage de ladite bague de raidissement (304) sur un diamètre intérieur pour faire correspondre ledit cône inversé de ladite au moins une encoche (302).

9. Procédé selon la revendication 7, dans lequel ledit usinage de l'encoche (302) comprend l'usinage de ladite au moins une encoche (302) circonférentiellement audit emplacement prédéterminé dans ladite surface extérieure dudit carter de turbine (204) avec une forme en chevrons; et
où ledit usinage de la bague de raidissement (304) comprend l'usinage de ladite bague de raidissement (304) sur un diamètre intérieur pour qu'elle corresponde à ladite forme en chevrons de ladite au moins une encoche (302).

10. Procédé selon la revendication 7, dans lequel l'usinage de ladite bague de raidissement (304) comprend l'usinage d'une surface supérieure de ladite bague de raidissement (304) de sorte que lorsque ladite bague de raidissement (304) est placée dans ladite au moins une encoche (302), ladite surface supérieure de ladite bague de raidissement (304) est en affleurement avec ladite surface extérieure dudit carter de turbine (204).

11. Procédé selon la revendication 7, dans lequel l'usinage de ladite bague de raidissement (304) comprend l'usinage de ladite bague de raidissement (304) en un superalliage à base de nickel.

12. Procédé selon la revendication 7, dans lequel l'usinage de ladite bague de raidissement (304) comprend l'usinage de ladite bague de raidissement (304) en un matériau qui est différent d'un matériau dudit carter de turbine (204), ledit matériau de ladite bague de raidissement (304) ayant un coefficient de dilatation plus bas que ledit matériau dudit carter de turbine (204).

13. Procédé selon la revendication 7, dans lequel ledit usinage de l'encoche comprend l'usinage de ladite au moins une encoche (302) dans ladite surface extérieure dudit carter de turbine (204) dans une première direction, où une pluralité de rainures sont formées et alignées sur ladite surface extérieure dans ladite première direction; et
où ledit usinage de la bague de raidissement (304) comprend l'usinage d'une surface intérieure de ladite bague de raidissement (304) dans une seconde direction, où une pluralité de rainures sont formées et alignées sur ladite surface intérieure dans ladite seconde direction;
où lorsque ladite surface extérieure de ladite au moins une encoche (302) et ladite surface intérieure de ladite bague de raidissement (304) sont placées ensemble, ladite pluralité de rainures sur ladite surface extérieure de ladite au moins une encoche (302) et ladite pluralité de rainures sur ladite surface intérieure de ladite bague de raidissement (304) s'alignent d'une manière quadrillée les unes aux autres, en augmentant les forces de friction entre ladite au moins une encoche (302) et ladite bague de raidissement (304) et en réduisant le potentiel d'un patinage de ladite bague de raidissement (304) dans ladite au moins une encoche (302).

14. Appareil pour utilisation dans un moteur propulseur à turbine à gaz, l'appareil comprenant:
un carter de turbine (204) ayant une surface extérieure qui définit au moins une encoche (302) usinée circonférentiellement dans ladite surface extérieure dudit carter de turbine (204) dudit moteur propulseur à turbine à gaz à un emplacement prédéterminé; et
une bague de raidissement (304) placée dans chacune desdites au moins une encoche (302) par un ajustement à retrait avec serrage;
où ladite bague de raidissement (304) applique une force de compression circonférentielle audit carter de turbine (204).

15. Appareil selon la revendication 14, comprenant en outre:
un moyen pour chauffer ladite bague de raidissement (304) pour amener un premier diamètre intérieur de ladite bague de raidissement (304) à augmenter à un second diamètre intérieur qui est plus grand qu'un diamètre extérieur de ladite au moins une encoche (302) à température ambiante, où après que ladite bague de raidissement (304) a été positionnée dans ladite au moins une encoche (302), ladite bague de raidissement (304) est amenée à se refroidir à ladite température ambiante en amenant ladite bague de raidissement (304) à diminuer dudit second diamètre intérieur vers ledit premier diamètre intérieur, mais sous la résistance dudit diamètre extérieur de ladite au moins une encoche (302), donnant lieu audit ajustement à retrait avec serrage.

16. Appareil selon la revendication 14, comprenant en outre:
un moyen pour refroidir ledit carter de turbine (204) pour amener un premier diamètre extérieur de ladite au moins une encoche (302) à diminuer à un second diamètre extérieur qui est plus petit qu'un diamètre intérieur de ladite bague de raidissement (304) à une température ambiante, où après que ladite bague de raidissement (304) a été positionnée dans ladite au moins une encoche (302), ledit carter de turbine (204) est amené à s'échauffer à ladite température ambiante en amenant ladite au moins une encoche (302) à augmenter dudit second diamètre extérieur vers ledit premier diamètre extérieur, mais sous la résistance dudit diamètre intérieur de ladite bague de raidissement (304), donnant lieu audit ajustement à retrait avec serrage.

17. Appareil selon la revendication 14, comprenant en outre:
un moyen pour chauffer ladite bague de raidissement (304) pour amener un premier diamètre intérieur de ladite bague de raidissement (304) à augmenter à un second diamètre intérieur; et
un moyen pour refroidir ledit carter de turbine (204) pour amener un premier diamètre extérieur de ladite au moins une encoche (302) à diminuer à un second diamètre extérieur qui est plus petit que ledit second diamètre de ladite bague de raidissement (304), où après que ladite bague de raidissement (304) a été positionnée dans ladite au moins une encoche (302), ladite bague de raidissement (304) est amenée à se refroidir à la température ambiante, et ledit carter de turbine (204) est amené à s'échauffer à ladite température ambiante, en amenant ladite bague de raidissement (304) à diminuer dudit second diamètre intérieur vers ledit premier diamètre intérieur, et ladite au moins une encoche (302) à augmenter dudit second diamètre extérieur vers ledit premier diamètre extérieur, donnant lieu audit ajustement à retrait avec serrage.

18. Appareil selon la revendication 14, dans lequel ledit emplacement prédéterminé pour l'usinage de ladite au moins une encoche (302) circonférentiellement dans ladite surface extérieure dudit carter de turbine (204) est à un emplacement coïncidant avec un joint de labyrinthe sur une surface intérieure dudit carter de turbine (204).

19. Appareil selon la revendication 14, dans lequel ledit emplacement prédéterminé pour l'usinage de ladite au moins une encoche (302) circonférentiellement dans ladite surface extérieure dudit carter de turbine (204) est à un emplacement coïncidant avec un point chaud dudit carter de turbine (204).

20. Appareil selon la revendication 14, dans lequel ladite bague de raidissement (304) comprend en outre une forme prédéterminée usinée pour correspondre à une forme de ladite au moins une encoche (302).

21. Appareil selon la revendication 14, dans lequel ladite encoche (302) présente un cône inversé usiné dans ladite au moins une encoche (302); et où ladite bague de raidissement (304) présente un cône inversé correspondant usiné sur un diamètre intérieur de ladite bague de raidissement (304).

22. Appareil selon la revendication 14, comprenant en outre:
une forme en chevrons usinée dans ladite au moins une encoche (302); et
une forme en chevrons correspondante usinée sur un diamètre intérieur de ladite bague de raidissement (304).

23. Appareil selon la revendication 14, dans lequel ladite bague de raidissement (304) comprend en outre:
une surface supérieure de ladite bague de raidissement (304) usinée de façon que lorsque ladite bague de raidissement (304) est placée dans ladite au moins une encoche (302), ladite surface supérieure de ladite bague de raidissement (302) est en affleurement avec ladite surface extérieure dudit carter de turbine (204).

24. Appareil selon la revendication 14, dans lequel ladite bague de raidissement (304) est usinée à partir d'un superalliage à base de nickel.

25. Appareil selon la revendication 14, dans lequel ladite bague de raidissement (304) est usinée en un matériau qui est différent d'un matériau dudit carter de turbine (204), ledit matériau ayant un coefficient de dilatation thermique plus bas que celui dudit matériau dudit carter de turbine (204).

26. Appareil selon la revendication 14, dans lequel en outre ladite au moins une encoche (302) dudit carter de turbine (204) présente une surface extérieure usinée qui définit une pluralité de rainures alignées dans une première direction sur ladite surface extérieure usinée de ladite au moins une encoche (302); et
où ladite bague de raidissement (304) présente une surface intérieure usinée qui définit une pluralité de rainures alignées dans une seconde direction sur ladite surface intérieure usinée de ladite bague de raidissement (304);
où lorsque ladite surface extérieure de ladite au moins une encoche (302) et ladite surface intérieure de ladite bague de raidissement (304) sont ajustées à retrait avec serrage ensemble, ladite pluralité de rainures sur ladite surface extérieure de ladite au moins une encoche (302) et ladite pluralité de rainures sur ladite surface intérieure de ladite bague de raidissement (304) s'alignent d'une manière quadrillée les unes aux autres, en augmentant les forces de friction entre ladite au moins une encoche (302) et ladite bague de raidissement (304) et en réduisant le potentiel d'un patinage de ladite bague de raidissement (304) dans ladite au moins une encoche (302).
